# FASCICULE DE BREVET EUROPEEN

(11) **EP 2 340 409 B1**
(45) Date de publication et mention de la délivrance du brevet: **02.01.2013**
(21) Numéro de dépôt: 09744376.6
(22) Date de dépôt: 26.10.2009
(51) Int. Cl.: G01C 19/66, G01C 19/70

(54) **DISPOSITIF ET PROCEDE DE MISE EN VIBRATION D'UN ELEMENT SOLIDE AMPLIFICATEUR AU SEIN D'UN GYROLASER**
EINRICHTUNG UND VERFAHREN ZUM VIBRIERENLASSEN EINES FESTEN VERSTÄRKUNGSGLIEDES IN EINEM KREISELLASER
DEVICE AND METHOD FOR VIBRATING A SOLID AMPLIFICATION MEMBER WITHIN A GYROLASER

(30) Priorité: 28.10.2008 FR 0805985
(43) Date de publication de la demande: 06.07.2011
(73) Titulaire: THALES, 92200 Neuilly-sur-Seine (FR)
(72) Inventeur: BOURA, André, F-86100 Chatellerault (FR); GUTTY, François, F- 91120 Palaiseau (FR); PEREZ, François, F-86440 Migné-Aurances (FR)
(74) Mandataire: Brunelli, Gérald
(86) Numéro de dépôt international: PCT/EP2009/064045
(87) Numéro de publication internationale: WO 2010/049374

(56) Documents cités:
- EP-A1- 1 890 107
- GB-A- 2 010 576
- US-A- 5 367 528
- US-B1- 6 462 825

## Description

L'invention porte sur un dispositif et un procédé de mise en vibration d'un élément solide amplificateur au sein d'un gyrolaser.

Un gyromètre est un capteur de mouvement qui permet de mesurer la vitesse de rotation du référentiel du capteur par rapport à un référentiel galiléen, suivant un ou plusieurs axes.

Un gyromètre laser est un laser en anneau bidirectionnel qui permet de mesurer une vitesse angulaire ou une position angulaire relative par intégration temporelle. Il est constitué d'une cavité optique composée de plusieurs miroirs rassemblés sur un bloc dans lequel des chemins sont percés pour fournir une cavité optique. Un milieu amplificateur est inséré dans le chemin optique de la cavité et un système d'excitation lui fournit de l'énergie permettant de générer le gain laser. Les éléments qui composent la cavité laser sont choisis de manière à permettre un fonctionnement bidirectionnel: la cavité laser doit pouvoir soutenir simultanément deux ondes qui se propagent en sens opposés (ondes dites contrarotatives).

Les gyromètres laser, également appelés gyrolasers, utilisent, dans leur majorité, un milieu amplificateur gazeux qui est habituellement un mélange d'hélium et de néon. Cependant, il est possible d'utiliser un gyrolaser à milieu amplificateur à l'état solide, dans lequel le milieu amplificateur gazeux est remplacé par un élément solide, par exemple une matrice de YAG (Yttrium-Aluminium-Grenat) dopée Néodyme.

Le principe de fonctionnement d'un gyrolaser est fondé sur l'effet Sagnac dans une cavité laser en anneau animée d'un mouvement de rotation. Lorsque la cavité est immobile, les deux ondes contrarotatives présentent la même fréquence optique. En présence d'un mouvement de rotation dans le plan de la cavité optique, l'effet Sagnac induit une différence de fréquence Ω entre les deux ondes optiques contrarotatives. Une fraction de l'énergie de chaque onde est extraite de la cavité. Un dispositif de recombinaison fait interférer les deux faisceaux extraits pour former des franges d'interférences qui sont observées à l'aide d'un ou plusieurs photo-détecteurs. Dans un gyromètre laser idéal, la fréquence des franges devant le photo-détecteur est proportionnelle à la vitesse de rotation imprimée à la cavité et leur sens de défilement dépend du sens de rotation. Dans les milieux solides habituellement utilisés, dont le Nd:YAG, les deux ondes contrarotatives se partagent les mêmes atomes amplificateurs. On parle alors de gain homogène. Le long de la cavité, les deux ondes contrarotatives forment une onde stationnaire avec des ventres et des noeuds d'intensité. Lorsque la cavité est au repos ou en rotation à très faible vitesse, le réseau d'interférence reste immobile par rapport à la cavité ; lorsque la cavité est soumise à une vitesse de rotation suffisante, les fréquences des modes contrarotatifs s'éloignent et le réseau se déplace par rapport aux éléments de la cavité. Les atomes du milieu à gain participent d'autant plus au processus d'émission stimulée qu'ils sont proches d'un ventre de l'onde stationnaire et d'autant moins qu'ils sont proches d'un noeud. Il se crée alors dans le milieu à gain un réseau d'inversion de population, inscrit par le réseau d'intensité de l'onde stationnaire. Ce réseau d'inversion de population subsiste tant que les fréquences des deux modes contrarotatifs sont suffisamment proches (ie le réseau d'intensité dans la cavité se déplace lentement). Son contraste est d'autant plus faible que le réseau d'intensité se déplace rapidement par rapport au temps de réaction du gain, c'est à dire que la différence de fréquence entre ondes contrarotatives est grande devant l'inverse du temps de vie du niveau excité.

De tels gyrolasers sont par exemple décrits dans les documents de brevets US 5367528, GB 2010576 et US 6462825.

La demande de brevet français FR 2905005 (THALES) ainsi que la demande de brevet européen EP 1890107 (THALES), décrivent un gyrolaser comportant au moins une cavité optique en anneau et un milieu amplificateur à l'état solide agencés de façon que deux modes optiques dits contra-rotatifs peuvent coexister à l'intérieur de ladite cavité optique et traverser le milieu amplificateur. Le milieu amplificateur est accouplé à un dispositif électromécanique assurant au milieu amplificateur un mouvement de translation périodique selon un axe sensiblement parallèle à la direction de propagation desdits modes optiques.

Un tel dispositif permet de moduler la position longitudinale du cristal actif autour d'une position moyenne, afin que les atomes du cristal soient en mouvement par rapport aux noeuds et aux ventres de la figure d'interférence formée par les deux modes contra-rotatifs, quelle que soit la différence de fréquence entre ces deux modes. Un tel dispositif permet de diminuer le contraste du réseau de gain, et donc ses effets néfastes pour les mesures de gyrométrie tout en ne modifiant pas la longueur de la cavité. Il permet également d'atténuer les effets de la rétrodiffusion induite par le milieu amplificateur. Enfin, le dispositif selon l'invention constitue potentiellement un dispositif de traitement de la zone aveugle pouvant, selon les cas, se substituer ou être complémentaire du dispositif habituel d'activation mécanique.

Un tel dispositif ne permet pas d'utiliser une fréquence d'activation élevée, nécessaire à une utilisation dans le domaine de l'aviation civile ou dans un système d'armes. En outre, la présence de la fréquence d'activation du milieu amplificateur dans la bande utile des fréquences de mesure provoque des perturbations sur les intensités optiques qui peuvent empêcher la bonne observation des signaux de sortie.

Un but de l'invention est de pallier aux divers problèmes précédemment cités.

Il est proposé, selon un aspect de l'invention, un gyrolaser comprenant un élément solide amplificateur, et un dispositif de mise en vibration dudit élément solide amplificateur à une fréquence f prédéterminée, selon un axe de révolution dudit élément solide amplificateur. En outre, la géométrie dudit élément solide amplificateur est telle qu'un mode propre de vibration mécanique dudit élément solide amplificateur correspond à ladite fréquence f prédéterminée.

Compte tenu du faible amortissement mécanique interne des cristaux susceptibles de constituer l'élément solide amplificateur, l'utilisation d'un mode propre permet d'obtenir un mouvement d'amplitude maximale pour une excitation donnée, et une excellente stabilité fréquentielle dudit mouvement.

De manière classique, en mécanique, on appelle mode propre d'un corps un mode de déformation en vibration de ce corps dans lequel les forces et moments d'inertie sont à chaque instant égaux et opposés aux forces et moments de rappel élastiques. Un mode propre est caractérisé notamment par sa déformée, c'est à dire par l'amplitude et la direction de la déformation du corps en chacun de ses points matériel, et par sa fréquence, couramment appelée fréquence propre du mode. On parle de mode propre non amorti d'un corps lorsqu'on détermine un mode propre de ce corps en faisant abstraction des phénomènes de dissipation d'énergie mécanique liés aux frottements internes pouvant exister dans ce corps.

Comme conséquence du rapport des forces et moments d'inertie aux forces et moments de rappel élastiques d'un mode propre, un corps vibrant selon un mode propre (fréquence et déformée) n'échange que très peu d'énergie mécanique avec son environnement : il peut accumuler et conserver de l'énergie mécanique. Les vibrations d'un corps selon un mode propre peuvent être considérées comme le résultat d'un échange interne permanent, à la fréquence du mode propre, entre énergie cinétique (vitesse de vibration) et énergie potentielle (déformation élastique).

Lorsque le corps considéré présente peu de dissipation interne, par exemple parce qu'il est monobloc et/ou parce qu'il est cristallin, une excitation mécanique permanente appliquée au corps selon la déformée d'un de ses modes propres et à la fréquence de ce mode propre provoque une accumulation croissante d'énergie. On observe par conséquent des amplitudes de mouvement vibratoire de plus en plus importantes, phénomène connu sous le nom de résonance. Dans un tel cas, l'amplitude du mouvement cesse de croître lorsque l'énergie dissipée en interne égale l'énergie que l'on apporte par l'excitation mécanique. On comprend que l'on obtient une amplitude de mouvement d'autant plus importante, pour une excitation donnée, que la dissipation interne est faible.

Avantageusement, ladite fréquence f de vibration est la fréquence du premier mode propre de vibration axisymétrique dudit élément solide amplificateur selon la direction de propagation des ondes optiques du gyrolaser.

L'encombrement global du dispositif de mise en vibration est ainsi limitée, car pour une fréquence de vibration f donnée, ce premier mode axisymétrique correspond à un diamètre extérieur minimal, et ainsi, avantageusement, à une masse minimale. De plus, l'obtention d'un tel élément solide amplificateur par tournage est d'un coût minimal.

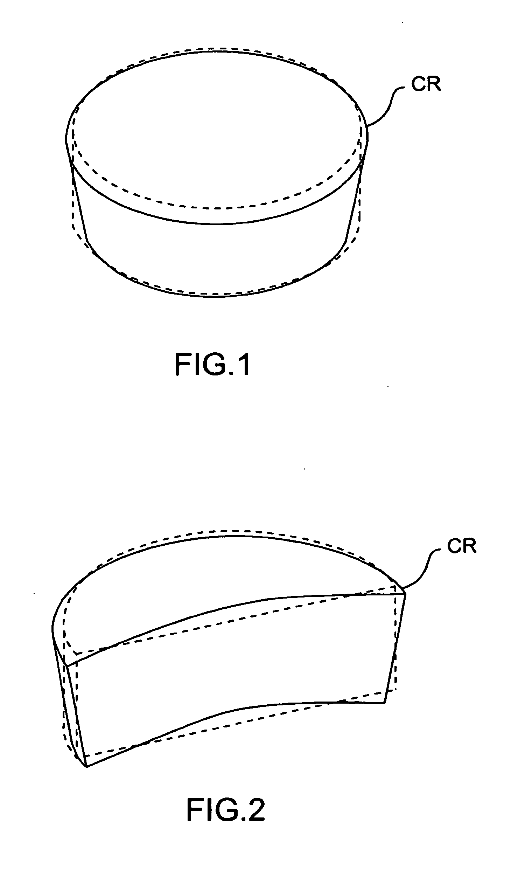

On entend par premier mode propre de vibration de l'élément solide amplificateur respectant une symétrie axiale par rapport audit axe de révolution, le mode propre de plus basse fréquence pour lequel l'amplitude et la direction du déplacement de tout point matériel de l'élément solide amplificateur ne dépendent que de la distance séparant ce point matériel de l'axe de révolution. Les figures 1 et 2 représentent, en vue d'ensemble et en coupe, la déformée du premier mode axisymétrique d'un élément solide amplificateur cylindrique.

Dans un mode de réalisation, l'élément solide amplificateur comprend une combinaison quelconque des milieux solides amplificateurs suivants : cristal Nd:YAG, Nd:KGW, Nd:YVO₄, Yb:GdCOB, et Nd,Cr:GSGG.

Ces types de cristaux, sont des cristaux connus, produits industriellement ou en laboratoire, fiables, et de coûts acceptables.

Selon un mode de réalisation, ladite fréquence f peut être comprise entre 0 et 1000 kHz, voire davantage.

Dans un mode réalisation, le dispositif de mise en vibration dudit élément solide amplificateur comprend des moyens d'excitation piézo-électriques, et/ou thermiques, et/ou mécaniques, et/ou magnétiques.

De tels moyens d'excitation pour mettre en vibration sont connus, fiables et de coûts modérés.

Bien entendu, d'autres moyens d'excitation convenant à la présente invention peuvent être envisagés.

Selon un mode de réalisation, le gyrolaser comprend, en outre, des moyens d'asservissement de ladite vibration de l'élément solide amplificateur, piézo-électriques, et/ou thermiques, et/ou magnétiques, et/ou optiques.

Le dispositif peut ainsi comprendre une rétroaction pour contrôler la fréquence des d'oscillations, et améliorer leur régularité spatiale et temporelle.

Dans un mode de réalisation, ledit dispositif de mise en vibration dudit élément solide amplificateur comprend un support montable/démontable.

Ainsi les coûts de réalisation d'appareils utilisant ces dispositifs sont limités.

Selon un mode de réalisation, le gyrolaser comprend des moyens de fixation et de découplage en vibration du support et de l'ensemble comprenant le dispositif de mise en vibration et l'élément solide amplificateur.

Ainsi, lorsque le dispositif est fixé sur un support, le support ne subit pas la fréquence des oscillations imposée au dispositif.

Dans un mode de réalisation, lesdits moyens de fixation et de découplage en vibration comprennent des contrepoids dynamiques, et/ou de colle souple de module d'Young de l'ordre du MPa.

La présence de contrepoids dynamiques, et/ou de la colle souple permet de découpler en vibrations le support montable/démontable et l'élément solide amplificateur, c'est-à-dire de limiter fortement les vibrations transmises par le support montable/démontable au système sur lequel le gyromètre est monté.

Selon un autre aspect de l'invention, il est proposé un système de mesure de une à trois vitesses angulaires ou de mesure de un à trois écarts angulaires relatifs selon des axes respectifs, comportant un à trois gyrolasers tels que précédemment décrits, respectivement orientés selon lesdits axes respectifs, et montés sur une structure mécanique commune.

Un tel système de mesure simplifie la mise en oeuvre des servitudes électroniques nécessaires au fonctionnement de l'ensemble, améliore la compacité matérielle et diminue les coûts de production ramenés à la voie métrologique

Selon un autre aspect de l'invention, il est également proposé un procédé de mise en vibration d'un élément solide amplificateur, dans lequel on met en vibration ledit élément solide amplificateur à une fréquence f prédéterminée, dans la direction de l'axe de révolution dudit élément solide amplificateur, et on conçoit ledit élément solide amplificateur de sorte qu'un mode propre de vibration dudit élément solide amplificateur correspond à ladite fréquence f prédéterminée.

Dans un mode de mise en oeuvre, on excite ledit élément solide amplificateur par effet piézo-électrique, et/ou effet thermique, et/ou effet magnétique.

L'invention sera mieux comprise à l'étude de quelques modes de réalisation décrits à titre d'exemples nullement limitatifs et illustrés par les dessins annexés sur lesquels :
- Les figures 1 et 2 représentent, en vue d'ensemble et en coupe, la déformée du premier mode axisymétrique d'un élément solide amplificateur cylindrique.
- la figure 3 est un schéma synoptique d'un mode de réalisation d'un dispositif de mise en vibration d'un élément solide amplificateur au sein d'un gyrolaser, selon un aspect de l'invention ; et
- la figure 4 est un schéma synoptique d'un dispositif selon la figure 3, en mode déformé à la fréquence de vibration, selon un aspect de l'invention ;

Sur les différentes figures, les éléments ayant des références identiques sont identiques.

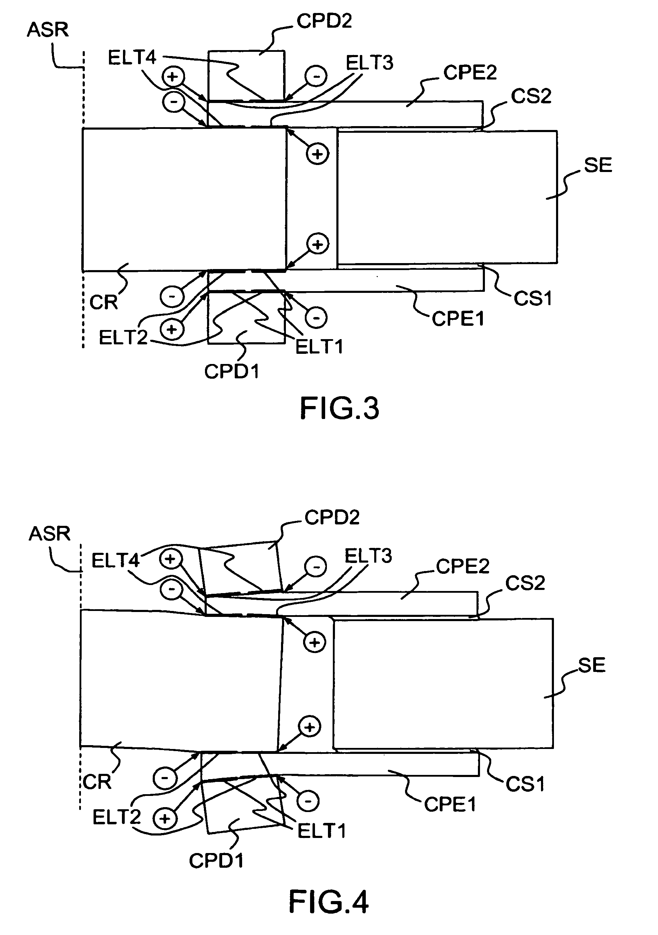

Tel qu'illustré sur la figure 3, un gyrolaser en demi-coupe, d'axe de symétrie de révolution ASR, est représenté.

Le gyrolaser comprend un élément amplificateur à état solide, ou, en d'autres termes un élément solide amplificateur, tel un cristal Nd:YAG référencé CR. En variante, l'élément amplificateur à état solide peut être une combinaison quelconque des milieux solides amplificateurs Nd:KGW, Nd:YVO₄, Yb:GdCOB, et Nd,Cr:GSGG.

Une première céramique piézo-électrique CPE1, commandée par deux paires d'électrodes ELT1 et ELT2, permet de mettre en vibration l'élément solide amplificateur CR, à une fréquence f déterminée, selon l'axe ASR. De manière fonctionnelle, la géométrie de l'élément solide amplificateur CR, et en particulier son dimensionnement, est élaborée de sorte qu'un mode propre de vibration de l'élément solide amplificateur CR correspond à la fréquence f prédéterminée.

En variante, cette mise en vibration, à une fréquence pouvant aller jusqu'à environ 1000 kHz, peut être effectuée par excitation thermique, mécanique magnétique, ou toute combinaison de ces excitations.

Une deuxième céramique piézo-électrique CPE2, optionnelle, liée en translation selon l'axe ASR, avec deux paires d'électrodes ELT3 et ELT4. Cette deuxième céramique piézo-électrique peut être commandée, via ces électrodes ELT3 et ELT4, en parallèle à la première, avec pour effet d'augmenter les forces d'excitation mises en oeuvre dans le dispositif. Il est également possible de diriger les tensions électriques apparaissant sur ces électrodes ELT3 et ELT4, représentatives de la contraction ou expansion de l'épaisseur de la deuxième céramique piézo-électrique CPE2,vers une unité de commande externe non représentée sur les figures, pour créer une boucle de rétroaction destinée à améliorer le contrôle de la vibration à la fréquence f.

Le gyrolaser comprend un support montable/démontable SMD, permettant de faciliter le montage ou démontage du gyrolaser, et ainsi de diminuer les coûts de réparation, d'évolution, et de conception de produit pour lesquels le gyrolaser est destiné.

Une première couche de colle souple CS1, de module d'Young de l'ordre du MPa, est disposée entre le support montable/démontable SMD et la première céramique piézo-électrique CPE1, et une deuxième couche de colle souple CS2 est disposée entre le support montable/démontable SMD et la deuxième céramique piézo-électrique CPE2.

Par exemple, les couches de colle souple CS1 et CS2 ont une épaisseur de l'ordre de 100 µm, et un module d'Young de l'ordre de 10MPa

De manière optionnelle, le gyrolaser comprend un premier contre-poids dynamique ou contre-balourd CPD1 monté fixement par collage rigide d'une épaisseur de l'ordre d'une dizaine de µm, de module d'Young de l'ordre de quelques GPa, sur la première céramique piézo-électrique CPE1, ainsi qu'un deuxième contre-poids dynamique ou contre-balourd CPD2 monté fixement par collage rigide similaire sur la deuxième céramique piézo-électrique CPE2.

Les deux couches de colle souple CS1 et CS2, ainsi que les premier et deuxième contre-poids dynamique CPD1 et CPD2 permettent de découpler en vibrations le support montable/démontable SMD et l'élément solide amplificateur CR, ce qui permet de limiter fortement les vibrations transmises par le support montable/démontable SMD au système sur lequel le gyromètre est monté.

Un tel gyrolaser, permet, par exemple pour un cristal YAG d'épaisseur environ 3 mm et de diamètre environ 8mm, d'obtenir des oscillations du cristal d'environ 0.3 µm crête à crête sur l'axe de révolution ou axe optique, à une fréquence sensiblement égale à 400 kHz.

La présente invention, permet d'obtenir un gyrolaser comprenant un élément solide amplificateur animé d'un mouvement vibratoire de translation dans la direction du faisceau optique, à une fréquence de plusieurs dizaines de kHz, pouvant atteindre 400 kHz, et au besoin plusieurs fois cette valeur.

## Revendications

1. Gyrolaser comprenant un élément solide amplificateur (CR), un dispositif de mise en vibration dudit élément solide amplificateur (CR) à une fréquence f prédéterminée, selon un axe de révolution (ASR) dudit élément solide amplificateur (CR), et **caractérisé en ce que** la géométrie dudit élément solide amplificateur (CR) est telle qu'un mode propre de vibration mécanique dudit élément solide amplificateur (CR) correspond à ladite fréquence f prédéterminée et à la direction de l'axe de révolution (ASR) dudit élément solide amplificateur (CR).

2. Gyrolaser selon la revendication 1, dans lequel ladite fréquence f de vibration est la fréquence du premier mode propre de vibration axisymétrique dudit élément solide amplificateur (CR) selon la direction de propagation des ondes optiques du gyrolaser.

3. Gyrolaser selon la revendication 1 ou 2, dans lequel l'élément solide amplificateur (CR) comprend une combinaison quelconque des milieux solides amplificateurs suivants : cristal Nd:YAG, Nd:KGW, Nd:YVO₄, Yb:GdCOB, et Nd,Cr:GSGG.

4. Gyrolaser selon l'une des revendications précédentes, dans lequel ladite fréquence f peut être comprise entre 0 et 1000 kHz.

5. Gyrolaser selon l'une des revendications précédentes, dans lequel ledit dispositif de mise en vibration dudit élément solide amplificateur (CR) comprend des moyens d'excitation piézo-électriques (CPE1, ELT1, ELT2), et/ou thermiques, et/ou magnétiques.

6. Gyrolaser selon l'une des revendications précédentes, comprenant, en outre, des moyens d'asservissement de ladite vibration de l'élément solide amplificateur (CR), piézo-électriques (CPE2, ELT3, ELT4), et/ou thermiques, et/ou mécaniques, et/ou magnétiques, et/ou optiques.

7. Gyrolaser selon l'une des revendications précédentes, dans lequel ledit dispositif de mise en vibration dudit élément solide amplificateur (CR) comprend un support montable/démontable (SMD).

8. Gyrolaser selon la revendication 7, comprenant des moyens de fixation et de découplage en vibration dudit support (SMD) et de l'ensemble comprenant le dispositif de mise en vibration et l'élément solide amplificateur (CR).

9. Gyrolaser selon la revendication 8, dans lequel lesdits moyens de fixation et de découplage en vibration comprennent des contrepoids dynamiques (CPD1, CPD2), et/ou de la colle souple (CS1, CS2) de module d'Young de l'ordre du MPa.

10. Système de mesure de une à trois vitesses angulaires ou de mesure de un à trois écarts angulaires relatifs selon des axes respectifs, **caractérisé en ce qu'**il comporte un à trois gyrolasers selon l'une des revendications précédentes, respectivement orientés selon lesdits axes respectifs, et montés sur une structure mécanique commune.

11. Procédé de mise en vibration d'un élément solide amplificateur (CR) d'un gyrolaser, caractérisé en ce l'on met en vibration ledit élément solide amplificateur (CR) à une fréquence f prédéterminée, dans la direction de l'axe de révolution (ASR) dudit élément solide amplificateur (CR), et on conçoit ledit élément solide amplificateur (CR) de sorte qu'un mode propre de vibration dudit élément solide amplificateur (CR) correspond à ladite fréquence f prédéterminée et à la direction de l'axe de révolution (ASR) dudit élément solide amplificateur (CR).

12. Procédé selon la revendication 11 dans lequel on excite ledit élément solide amplificateur (CR) par effet piézo-électrique, et/ou effet thermique, et/ou effet magnétique.

## Claims

1. A gyrolaser comprising a solid amplifying element (CR), a device for vibrating said solid amplifying element (CR) at a predetermined frequency f along an axis of revolution (ASR) of said solid amplifying element (CR), and **characterised in that** the geometry of said solid amplifying element (CR) is such that a natural mode of mechanical vibration of said solid amplifying element (CR) corresponds to said predetermined frequency f and to the direction of the axis of revolution (ASR) of said solid amplifying element (CR).

2. The gyrolaser according to claim 1, wherein said vibration frequency f is the frequency of the first natural mode of axisymmetric vibration of said solid amplifying element (CR) along the direction of propagation of the optical waves of the gyrolaser.

3. The gyrolaser according to claim 1 or 2, wherein the solid amplifying element (CR) comprises any combination of the following solid amplifying media: crystal Nd:YAG, Nd:KGW, Nd:YVO₄, Yb:GdCOB and Nd, Cr:GSGG.

4. The gyrolaser according to any one of the preceding claims, wherein said frequency f can be between 0 and 1,000 kHz.

5. The gyrolaser according to any one of the preceding claims, wherein said device for vibrating said solid amplifying element (CR) comprises piezoelectric (CPE1, ELT1, ELT2) and/or thermal and/or magnetic excitation means.

6. The gyrolaser according to any one of the preceding claims, further comprising piezoelectric (CPE2, ELT3, ELT4) and/or thermal and/or mechanical and/or magnetic and/or optical means for controlling said vibration of the solid amplifying element (CR).

7. The gyrolaser according to any one of the preceding claims, wherein said device for vibrating said solid amplifying element (CR) comprises a mountable/dismountable support (SMD).

8. The gyrolaser according to claim 7, comprising means for fixing and vibration decoupling said support (SMD) and the assembly comprising the vibrating device and the solid amplifying element (CR).

9. The gyrolaser according to claim 8, wherein said means for fixing and vibration decoupling include dynamic counterweights (CPD1, CPD2) and/or flexible glue (CS1, CS2) with a Young modulus of the order of MPa.

10. A system for measuring from one to three angular speeds or for measuring from one to three relative angular deviations along respective axes, **characterised in that** it comprises one to three gyrolasers according to any one of the preceding claims, respectively oriented along said respective axes and mounted on a common mechanical structure.

11. A method for vibrating a solid amplifying element (CR) of a gyrolaser, **characterised in that** said solid amplifying element (CR) is vibrated at a predetermined frequency f in the direction of the axis of revolution (ASR) of said solid amplifying element (CR), and said solid amplifying element (CR) is designed so that a natural vibration mode of said solid amplifying element (CR) corresponds to said predetermined frequency f and to the direction of the axis of revolution (ASR) of said solid amplifying element (CR).

12. The method according to claim 11, wherein said solid amplifying element (CR) is excited by a piezoelectric and/or thermal and/or magnetic effect

## Patentansprüche

1. Kreisellaser, der ein festes Verstärkungselement (CR) und eine Vorrichtung umfasst, um das feste Verstärkungselement (CR) mit einer vorbestimmten Frequenz f gemäß einer Drehachse (ASR) des festen Verstärkungselements (CR) in Schwingung zu versetzen, und **dadurch gekennzeichnet, dass** die Geometrie des festen Verstärkungselements (CR) so ist, dass eine mechanische Schwingungseigenmode des festen Verstärkungselements (CR) der vorbestimmten Frequenz f und der Richtung der Drehachse (ASR) des festen Verstärkungselements (CR) entspricht.

2. Kreisellaser nach Anspruch 1, bei dem die Schwingungsfrequenz f die Frequenz der ersten asymmetrischen Schwingungseigenmode des festen Verstärkungselements (CR) in der Ausbreitungsrichtung der optischen Wellen des Kreisellasers ist.

3. Kreisellaser nach Anspruch 1 oder 2, wobei das feste Verstärkungselement (CR) eine beliebige Kombination der folgenden festen Verstärkungsmedien umfasst: Kristall Nd:YAG, Nd:KGW, Nd:YVO₄, Yb:GdCOB und Nd,Cr:GSGG.

4. Kreisellaser nach einem der vorherigen Ansprüche, bei dem die Frequenz f zwischen 0 und 1000 kHz liegen kann.

5. Kreisellaser nach einem der vorherigen Ansprüche, bei dem die Vorrichtung, um das feste Verstärkungselement (CR) in Schwingung zu versetzen, piezoelektrische (CPE1, ELT1, ELT2) und/oder thermische und/oder magnetische Anregungsmittel umfasst.

6. Kreisellaser nach einem der vorherigen Ansprüche, der darüber hinaus piezoelektrische (CPE2, ELT3, ELT4) und/oder thermische und/oder mechanische und/oder magnetische und/oder optische Mittel zum Regeln der Schwingung des festen Verstärkungselements (CR) umfasst.

7. Kreisellaser nach einem der vorherigen Ansprüche, bei dem die Vorrichtung, um das feste Verstärkungselement (CR) in Schwingung zu versetzen, einen de/montierbaren Träger (SMD) umfasst.

8. Kreisellaser nach Anspruch 7, der Mittel zum Befestigen und zur Schwingungsabkopplung des Trägers (SMD) und der Baugruppe umfasst, die die Vorrichtung umfasst, um das feste Verstärkungselement (CR) in Schwingung zu versetzen.

9. Kreisellaser nach Anspruch 8, bei dem die Mittel zum Befestigen und zur Schwingungsabkopplung dynamische Gegengewichte (CPD1, CPD2) und/oder flexiblen Klebstoff (CS1, CS2) mit einem Young-Modul in der Größenordnung von MPa umfassen.

10. System zum Messen von einer bis drei Winkelgeschwindigkeiten oder zum Messen von einer bis drei relativen Winkelabständen gemäß relativen Achsen, **dadurch gekennzeichnet, dass** es ein bis drei Kreisellaser nach einem der vorherigen Ansprüche umfasst, die jeweils entlang den jeweiligen Achsen orientiert und an einer gemeinsamen mechanischen Struktur montiert sind.

11. Verfahren zum Inschwingungversetzen eines festen Verstärkungselements (CR) eines Kreisellasers, **dadurch gekennzeichnet, dass** das feste Verstärkungselement (CR) mit einer vorbestimmten Frequenz f in der Richtung der Drehachse (ASR) des festen Verstärkungselements (CR) in Schwingung versetzt wird und das feste Verstärkungselement (CR) so ausgelegt ist, dass eine Eigenschwingungsmode des festen Verstärkungselements (CR) der vorbestimmten Frequenz f und der Richtung der Drehachse (ASR) des festen Verstärkungselements (CR) entspricht.

12. Verfahren nach Anspruch 11, bei dem das feste Verstärkungselement (CR) durch einen piezoelektrischen und/oder thermischen und/oder magnetischen Effekt angeregt wird.
